# FASCICULE DE BREVET EUROPEEN

(11) **EP 3 931 505 B1**
(45) Date de publication et mention de la délivrance du brevet: **14.12.2022**
(21) Numéro de dépôt: 20713719.1
(22) Date de dépôt: 25.02.2020
(51) Int. Cl.: F25J 3/04, F25J 5/00

(54) **MÉTHODE DE FABRICATION D'UN APPAREIL D'ÉCHANGE DE CHALEUR ET DE MATIÈRE**
VERFAHREN ZUR HERSTELLUNG EINER VORRICHTUNG ZUM AUSTAUSCH VON WÄRME UND MATERIAL
METHOD FOR MANUFACTURING AN APPARATUS FOR EXCHANGING HEAT AND MATERIAL

(30) Priorité: 25.02.2019 FR 1901872; 25.02.2019 FR 1901868; 25.02.2019 FR 1901869
(43) Date de publication de la demande: 05.01.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: MASLIAH, Eric, 94781 VITRY SUR SEINE (FR); MARIE, Camille, 94781 VITRY SUR SEINE (FR); AMANT, Ludovic, 94781 VITRY SUR SEINE (FR); LE BOT, Patrick, 94503 CHAMPIGNY SUR MARNE (FR)
(74) Mandataire: Air Liquide
(86) Numéro de dépôt international: PCT/FR2020/050354
(87) Numéro de publication internationale: WO 2020/174172

(56) Documents cités:
- WO-A1-91/00141
- WO-A1-2012/045717
- US-B1- 6 295 839
- O.S.L. BRUINSMA ET AL: "The structured heat integrated distillation column", CHEMICAL ENGINEERING RESEARCH AND DESIGN, vol. 90, no. 4, 1 avril 2012 (2012-04-01), pages 458-470, XP055624888, AMSTERDAM, NL ISSN: 0263-8762, DOI: 10.1016/j.cherd.2011.08.023 cité dans la demande

## Description

La présente invention est relative à une méthode de fabrication d'un appareil d'échange de chaleur et de matière selon la revendication 1.

Elle concerne également un appareil d'échange selon la revendication 9 fabriqué par le procédé. Une telle méthode de fabrication correspondant au préambule de la revendication 1 est connue de WO 91/00141.

Les colonnes d'échange de chaleur et/ou de matière sont aujourd'hui utilisées dans une grande variété de procédés. Par exemple, ces colonnes d'échange de chaleur et/ou de matière permettent de mettre en œuvre des procédés de lavage, des procédés de refroidissement, des procédés de réchauffage ou encore des procédés de distillation.

L'ensemble de ces procédés reposent sur un même principe de base, à savoir l'échange de chaleur et/ou de matière entre deux fluides. Ces deux fluides peuvent par exemple être deux liquides, deux gaz ou encore un liquide et un gaz.

De telles colonnes comprennent ainsi au moins un moyen d'échange de chaleur et/ou de matière qui est traversé par les deux fluides et au niveau duquel l'échange de chaleur et/ou de matière entre ces deux fluides s'opère.

Habituellement on fabrique une colonne d'échange de chaleur et/ou de matière en disposant des lamelles ondulées, rassemblées en blocs pour former des garnissages structurés, à l'intérieur d'une virole cylindrique. La méthode est lente et coûteuse, à cause des dimensions des colonnes et également à cause de la complexité de fabrication et d'installation des garnissages.

Il est également connu de produire un corps d'échange de chaleur en formant un empilage de plaques rectangulaires, séparés par des ailettes perforées et ensuite en brasant l'empilage pour former un corps ayant une pluralité de passages. Ce genre de corps est ensuite utilisé pour transférer de la chaleur d'un fluide à l'autre, le fluide dans un passage à ailettes transférant sa chaleur à travers la plaque au fluide dans le passage à ailettes adjacent.

Si ce genre de corps est utilisé partout comme échangeur de chaleur, il n'a jamais été exploité à échelle industrielle pour la séparation des fluides à températures en dessous de 0°C.

La présente invention vise à proposer une façon rapide et efficace de fabriquer un appareil d'échange de chaleur et/ou de matière. Il permet également de produire un appareil de séparation facile à fabriquer avec des performances améliorées par rapport à un simple échangeur de chaleur à plaques et à ailettes utilisé comme déphlegmateur.

L'usage d'une multiplicité de colonnes contenant des moyens permettant l'échange de chaleur et de matière permet d'uniformiser l'écoulement des fluides à travers les espaces entre les plaques. Les colonnes minimisent les effets de bord rencontrés quand les fluides traversent une espace plus grande. Alimentées toutes ou substantiellement toutes par un débit du même fluide, les colonnes permettent d'effectuer une séparation ou un mélange de fluides, par exemple un lavage ou une distillation.

Selon un aspect de l'invention, il est prévu une méthode de fabrication d'un appareil d'échange de matière et de chaleur constitué par une pluralité de colonnes et par une série d'au moins trois plaques métalliques de section rectangulaire, les plaques étant substantiellement toutes de même forme et dimensions, chaque plaque étant séparée de la plaque adjacente par un groupe de colonnes creuses en métal qui sont alignées et de section polygonale, de préférence rectangulaire, les colonnes de chaque groupe étant parallèles les unes aux autres, éventuellement toutes les colonnes de l'appareil étant parallèles les unes aux autres, les colonnes de chaque groupe étant chacune en contact avec les deux plaques métalliques de part et d'autre du groupe, au moins certaines des colonnes d'un groupe, voire de chaque groupe, voire toutes les colonnes d'un groupe, contenant un moyen d'échange de chaleur et de matière, par exemple un garnissage tel qu'un garnissage métallique en vrac, au moins les parties des plaques qui sont en contact avec les colonnes étant revêtues d'un matériau de brasement dans lequel les plaques sont solidarisées avec les colonnes en plaçant l'appareil d'échange dans un four et en chauffant le four pour braser l'appareil pour former un bloc parallélépipédique .

Selon d'autres aspects facultatifs :
- la température maximale subie par l'appareil pendant le brasage est inférieure à la température de fusion des plaques, à la température de fusion des colonnes et de préférence à la température de fusion du moyen d'échange de chaleur et de matière.
- les plaques, les colonnes et éventuellement le moyen d'échange de chaleur et de matière sont tous formés i) du même métal ou ii) du même alliage ou iii) d'alliages du même métal principal.
- les plaques et/ou les colonnes et/ou le moyen d'échange de chaleur et de matière est/sont en un des métaux suivants : aluminium, acier inoxydable, nickel, cuivre ou titane.
- le moyen d'échange de chaleur et de matière est en acier inoxydable.
- au moins certains des colonnes ont une section rectangulaire ou carrée.
- la dimension minimale d'un bord de la section d'une colonne est supérieure à 2 cm et de préférence supérieure à 10 cm.
- la dimension minimale d'un bord de la section d'une colonne est inférieure à 10 cm.
- la longueur d'une plaque est au moins égale à 1 m.
- on remplit des colonnes de garnissage, de préférence en vrac, on empile les plaques et les groupes de colonnes remplies, de préférence entièrement, de garnissage pour former l'appareil et ensuite on brase l'appareil pour solidariser les colonnes avec les plaques.
- les plaques sont pleines.
- les plaques sont non-perforées.
- au moins une des plaques est pleine mais comprend un nombre de perforations localisées, par exemple pour permettre le passage de fluide d'un passage à celui adjacent ou pour équilibrer la distribution du liquide ou les pertes de charge côté gaz.
- chacune des colonnes est un élément discret.

Selon un autre aspect de l'invention, il est prévu un appareil d'échange de matière et/ou de chaleur constitué par une série de plaques métalliques de section rectangulaire, chaque plaque étant séparée de la plaque adjacente par un groupe de colonnes creuses en métal alignées de section de préférence rectangulaire, les colonnes de chaque groupe étant parallèles les unes aux autres, les colonnes de chaque groupe étant chacune en contact avec les deux plaques métalliques de part et d'autre du groupe, au moins certaines des colonnes d'un groupe, voire de chaque groupe, voire toutes les colonnes d'un groupe, contenant un moyen d'échange de chaleur et de matière, par exemple un garnissage, tel qu'un garnissage métallique en vrac, au moins les parties qui sont en contact avec les colonnes étant revêtues avant brasage d'un matériau de brasement, l'appareil d'échange étant fabriqué par une méthode telle que décrite ci-dessus.

Selon d'autres aspects facultatifs :
- chaque plaque est séparée de la plaque adjacente par plusieurs séries de colonnes creuses en métal, alignées de section de préférence rectangulaire, les colonnes de chaque série étant parallèles les unes aux autres, les colonnes de chaque groupe étant chacune en contact avec les deux plaques métalliques de part et d'autre de la série.

L'invention comprend également un appareil de séparation, par exemple par distillation ou par lavage, pour usage à des températures en dessous de 0°C comprenant un appareil d'échange de matière et de chaleur tel que décrit ci-dessus, l'appareil étant orienté de sorte qu'en usage un liquide introduit dans une colonne coule dans chaque colonne par effet de gravitation, des moyens pour envoyer un fluide à séparer à l'appareil d'échange comprenant au moins deux composants, des moyens pour sortir d'au moins une extrémité de l'appareil au moins un fluide séparé enrichi en un des composants du fluide à séparer et des moyens d'isolation de l'appareil d'échange, par exemple une enceinte isolée contenant l'appareil d'échange.

De préférence les moyens pour envoyer le fluide à séparer à l'appareil d'échange sont reliés à au moins les deux tiers des colonnes, voire chaque colonne afin d'envoyer une partie du fluide à séparer à au moins deux tiers des colonnes, voire à chaque colonne.

D'autres caractéristiques, détails et avantages ressortiront plus clairement à la lecture de la description détaillée donnée ci-après, à titre indicatif, en relation avec les figures suivantes :
- La Figure 1 est une vue schématique en perspective d'un appareil d'échange de chaleur et/ou de matière fabriqué selon la présente invention.
- La Figure 2 est une vue partielle, selon une coupe horizontale, de l'appareil d'échange de chaleur et/ou de matière selon l'invention.
- La Figure 3 est une vue partielle, selon une coupe horizontale, de deux colonnes d'échange de chaleur et/ou de matière d'un appareil selon l'invention.
- La Figure 4 illustre une coupe de l'intérieur d'un appareil d'échange de chaleur et de matière selon l'invention.
- La Figure 5 illustre une disposition alternative des colonnes d'une zone de l'appareil selon l'invention.

Dans la suite de la description, les termes « moyen de transfert de matière et d'échange de chaleur direct et/ou indirect » et « moyen d'échange » seront utilisés sans distinction. De façon analogue, les termes « appareil d'échange de transfert de matière et d'échange de chaleur direct et/ou indirect » et « appareil » seront utilisés sans distinction. Une direction verticale correspond à une direction d'extension principale d'un appareil selon l'invention, lorsque cet appareil est dans une position fonctionnelle, c'est-à-dire une position dans laquelle un échange de matière et de chaleur direct et/ou indirect peut s'opérer.

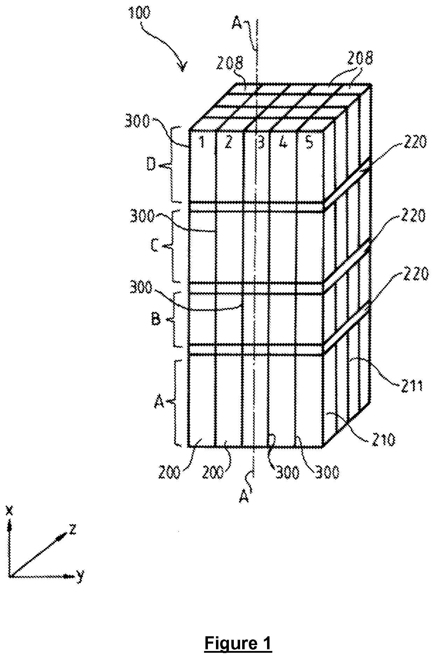

La Figure 1 illustre ainsi un appareil 100 de transfert matière et d'échange de chaleur indirect et direct selon l'invention dans un mode d'assemblage par brasage qui comprend trois zones A, C et D de transfert de matière et d'échange direct et intégrant une zone B d'échange de chaleur indirect de type vaporiseur-condenseur. Cet appareil comprend une pluralité d'au moins deux, voire d'au moins trois, de préférence au moins dix, plaques planes 300 de section rectangulaire ainsi qu'une pluralité de colonnes 200 de transfert de matière et d'échange de chaleur direct. Les plaques planes 300 sont de la même forme et ont les mêmes dimensions. Les plaques peuvent être pleines, c'est-à-dire non-perforées.

Or une plaque peut être considérée pleine même en comprenant un nombre de perforations localisées pour permettre le passage de fluide d'un passage à celui adjacent ou pour équilibrer la distribution du liquide ou les pertes de charge côté gaz. L'appareil est en forme de bloc parallélépipédique à section rectangulaire, voire carrée. La longueur de l'appareil est celle des plaques selon l'axe X. Sa largeur est celle des plaques selon l'axe Z et son épaisseur est fonction du nombre de plaques et des dimensions selon l'axe Y des colonnes d'échange de chaleur et/ou de matière.

Ces plaques 300 sont disposées avec leur longueur à la verticale selon l'axe X et leur largeur à l'horizontale selon l'axe Z en usage comme moyen d'échange de chaleur et de matière.

Selon l'exemple illustré ici, l'appareil comprend cinq plaques planes 300 et quatre-vingt colonnes 200. Une sixième plaque plane 300 formant partie de l'empilement doit normalement couvrir la surface définie par la longueur de l'appareil et sa largeur. Cette plaque n'est pas illustrée pour mieux apercevoir la construction de l'appareil.

La longueur des plaques 300 est au moins égale à 1 m, de préférence au moins égale à 2 m, voire au moins égale à 3 m.

Les colonnes sont disposées dans trois zones A, C, D, chaque zone comprenant vingt colonnes disposées en cinq rangées 1,2,3,4,5 chaque rangée comprenant quatre colonnes. Les colonnes 200 sont toutes de construction identiques, même si leurs dimensions peuvent différer. Ici chacune des soixante colonnes a la même section carrée. Les colonnes peuvent toutes avoir la même section rectangulaire ou simplement la même section.

Ces colonnes sont de préférence des colonnes facilement disponibles dans le commerce qui peuvent être commandées en grande quantité, à bas prix et avec les dimensions et géométries correspondant à leur rôle dans l'appareil. Ceci permet à la fois de standardiser des appareils pour simplifier leur fabrication et en réduire les coûts et aussi de dimensionner d'autres appareils plus précisément si les besoins du client sont plus pointus. Dans la direction Y, ces colonnes ont typiquement une dimension de quelques centimètres c'est-à-dire entre 2 cm et 10 cm. Dans la direction Z, cette dimension est aussi typiquement de quelques centimètres voire quelques décimètres.

Avant le brasage, les colonnes 200 sont des éléments discrets, séparable chacun de chacun des autres. Après le brasage, elles peuvent être solidarisées entre elles ou pas.

Les colonnes d'une même zone A, C ou D ont la même longueur pour former un bloc parallélépipédique de vingt colonnes 200.

Dans la section B, pour assurer un échange de chaleur indirect de type vaporiseur condenseur, on peut diviser l'empilage par des tôles intercalaires 301 et utiliser des ondes d'échange classiques telles que décrites par l'ALPEMA. L'intérêt de disposer le vaporiseur-condenseur dans l'appareil, outre la combinaison des fonctions est d'assurer une certaine équidistribution des débits dans les différents passages (séparés par les tôles 300), soit en assurant le reflux liquide pour la zone A et en étant le moteur de de l'écoulement du gaz dans ce passage grâce à la condensation, soit en assurant le rebouillage des zones C et D en vaporisant partiellement le liquide issu de la zone C de manière à assurer un débit de gaz montant dans les zones C et D.

Le nombre de passages dans la section B est de préférence à minima deux passages de manière à avoir au-dessus de chaque passage de la zone A déterminé par les tôles 300 un passage dans la zone B fonctionnant en condensation de manière à alimenter la zone A en liquide et en-dessous de chaque passe de la zone C un passage dans la zone B fonctionnant en vaporisation de manière à alimenter la zone C en gaz.

Il sera compris que les zones peuvent avoir des longueurs différentes selon la fonctionnalité qu'elles doivent avoir et la longueur des colonnes est choisie en fonction de celle des zones.

Les parois des colonnes sont de préférences pleines de sorte qu'un fluide ne puisse les traverser.

Le nombre de colonnes dans chaque section peut être différent d'une section à une autre. Les colonnes ne sont pas forcément de section carrée mais peuvent avoir une section rectangulaire, voire polygonale, par exemple triangulaire ou d'une forme polygonale avec deux faces parallèles, par exemple, octogonale.

Chaque colonne 200 est en sandwich entre deux plaques planes 300, en contact avec ces deux plaques d'où l'intérêt d'avoir une section avec deux parois parallèles. Il sera compris que des plaques planes 500 peuvent être disposées sur les faces des colonnes à droite et à gauche de la Figure 1 (dans le plan (X,Z) pour fermer l'appareil, ces plaques n'étant pas illustrées pour permettre de voir la structure intérieure de l'appareil. Alternativement il est possible d'augmenter l'épaisseur des plaques planes 300 situés à l'extérieur de l'appareil pour rendre l'appareil plus solide.

Chaque espace entre une paire de plaques adjacentes 300 contient un alignement 208 de quatre colonnes 200 qui se touchent suivant l'axe Z.

Il y aura également éventuellement des barres 400 pour fermer les espaces entre les plaques 300 sur le devant et à l'arrière de l'appareil 100, mais celles-ci empêcheraient de voir les colonnes 200 et donc ne sont pas illustrées ici.

Néanmoins il est envisageable que les barres 400 ne soient pas présentes, et que l'étanchéité soit assurée par les colonnes elles-mêmes ou par un autre moyen, tel que la colle.

Dans cette figure, comme chaque colonne a la même section et chaque zone comprend le même nombre de colonnes, il est facile d'arranger chaque colonne 200 d'une rangée directement en dessous la colonne de la zone supérieure.

Chaque colonne est en contact avec une autre colonne si elle se trouve en bout de rangée ou avec deux autres colonnes.

La description qui va être faite ci-après de l'une d'elles s'applique mutatis mutandis à l'ensemble des colonnes 200 constitutives de l'appareil 100 illustré sur la Figure 1.

Selon l'exemple illustré ici, l'appareil 100 est représenté dans sa position de fonctionnement.

On entend par « position de fonctionnement » une position dans laquelle l'appareil 100 peut être utilisé. Chaque colonne 200 présente un axe d'extension principal parallèle à la direction d'extension principale X de l'appareil 100 d'échange de chaleur et/ou de matière. Lorsque l'appareil 100 est dans une position verticale, c'est-à-dire sa position de fonctionnement, cet axe X d'extension principal est un axe vertical. Il est entendu qu'il ne s'agit que d'un exemple de réalisation de la présente invention et que l'appareil 100 ainsi que les colonnes 200 constitutives de cet appareil 100 pourraient présenter une forme différente sans sortir du contexte de la présente invention. L'axe Y représente l'empilage de l'appareil qui est fonction du nombre de plaques 300 empilées et des dimensions des colonnes 200. L'axe Z représente la largeur de l'appareil qui correspond à la largeur des plaques 300.

L'appareil comprend éventuellement un moyen d'obturation constitué par des barres latérales 400 reliées de façon étanche au bord des plaques.

Un tel appareil 100 est configuré pour permettre au moins un transfert de matière et d'échange de chaleur indirect entre deux fluides. Par exemple, l'appareil peut ainsi être configuré pour permettre un échange de chaleur et de matière entre un liquide qui circule dans l'appareil selon un premier sens et un gaz qui circule dans l'appareil selon un deuxième sens. Il est entendu que tout autre procédé d'échange de chaleur et de matière entre deux fluides peut être mis en œuvre par l'appareil 100 selon l'invention sans sortir du contexte de celle-ci. Par exemple, l'appareil 100 peut être configuré pour mettre en œuvre un procédé de lavage et/ou un procédé de distillation.

L'appareil peut permettre le contact pour l'échange de matière et de chaleur entre une phase gazeuse montante suivant l'axe de l'appareil et une phase liquide descendante sous l'effet de la gravité.

L'appareil peut également contenir la pression de fonctionnement grâce aux liaisons mécaniques par brasage entre plaques et barres latérales.

En tout état de cause, l'appareil 100 selon l'invention comprend au moins une arrivée du premier fluide, par exemple une arrivée de liquide, et au moins une arrivée du deuxième fluide, par exemple une arrivée de gaz, ces arrivées de fluides n'étant pas représentées sur les figures décrites ici.

Chaque colonne 200 comprend quatre parois 202 entourant un espace 204 ouvert aux deux extrémités pour permettre le passage de fluide à travers la colonne dans le sens de la longueur. Aucun fluide ne peut traverser les quatre parois.

La colonne contient un moyen de transfert de masse et de chaleur. Ce moyen peut être un garnissage de type structuré ou vrac.

On entend par garnissage tout type de structure permettant d'obtenir une surface de contact important entre une phase liquide et une phase gazeuse et ainsi d'améliorer les échanges entre la phase liquide et la phase gazeuse.

La surface de contact de ce garnissage est supérieure à la surface de contact constituée par les parois internes des colonnes 200, de préférence très supérieure.

On appelle garnissage de type vrac, des empilements anarchiques, aléatoires, d'éléments unitaires possédant des formes particulières, par exemple des anneaux, des spirales... Les échanges de chaleur et/ou de matière se réalisent à l'aide de ces éléments unitaires. Ces éléments unitaires peuvent être en métal, en céramique, en plastique ou en matériaux analogues. « Packed Bed Columns » de N. Kolev, éd Elsevier, 2006 pp 154-161 décrit des exemples d'élément unitaire de garnissage vrac.

Le garnissage vrac offre des qualités intéressantes en termes d'efficacité de transfert, faible perte de charge et simplicité d'installation., il comprend par exemple des anneaux de Raschig, des anneaux de Pall, des billes, des garnissages prismatiques en spirale. D'autres types de garnissages sont évidemment envisageables, tels que les garnissages structurés, plus complexes de mise en œuvre, ou la mousse métallique.

L'usage de garnissages en vrac est particulièrement recommandé car il permet d'avoir à portée de main une source de garnissage facilement disponible dans le commerce qui peut être choisi pour avoir des caractéristiques très particulier ou acheté en grande quantité à bas prix pour des appareils standardisés. Ces garnissages sont facilement disponibles dans le commerce qui peuvent être commandés en grande quantité, à bas prix et avec les dimensions et géométries correspondant à leur rôle dans l'appareil. Ceci permet à la fois de standardiser des appareils pour simplifier leur fabrication et en réduire les coûts et aussi de dimensionner d'autres appareils plus précisément si les besoins du client sont plus pointus.

De préférence, la colonne est entièrement remplie par le garnissage.

Les plaques, les colonnes et les moyens de transfert de masse et de chaleur sont de préférence en métal, par exemple en aluminium, acier inoxydable, nickel, cuivre ou en titane. Les plaques, les colonnes et éventuellement le moyen d'échange de chaleur et de matière sont de préférence formés i) du même métal ou ii) du même alliage ou iii) d'alliages du même métal principal.

Le garnissage peut être en acier inoxydable ou en un matériau plus compatible avec l'oxygène comme le cuivre, le nickel, l'Inconel ^{®}, le Monel ^{®}...

La plaque de chaque paire de plaques adjacentes est contiguë aux colonnes entre la paire de plaques et les colonnes dans l'espace entre la paire de plaque sont contiguës les unes aux autres.

De préférence, les colonnes ne sont pas revêtues de matériau de brasage, mais elles peuvent l'être. Ce sont les tôles dites séparatrices 300 qui sont en général revêtues de brasure des deux côtés.

De préférence, l'espace entre deux plaques adjacentes a une largeur substantiellement égale à une des petites dimensions de la colonne d'échange, de sorte que chaque colonne touche deux plaques adjacentes, même avant l'opération de brasage.

Chaque colonne d'une zone C peut être séparée de la colonne de la zone adjacente D par des moyens de distribution ou de séparation 220, en contact avec les plaques 300 adjacentes.

De préférence, comme illustré, les moyens de distribution sont communs aux quatre colonnes d'un alignement 208 entre deux plaques 300. Par contre les moyens de distribution sont disposés dans les espaces entre deux plaques 300 et ne traversent pas les plaques.

Une fois les plaques, les colonnes pré-remplies de garnissage et les moyens de distribution mis en place, l'appareil est placé dans un four en atmosphère inerte ou réductrice et brasé pour solidariser les colonnes et les moyens de distribution avec les plaques.

La température du four est choisie de sorte que les colonnes sont solidarisées chacune à deux plaques sur des côtés opposés, ce qui suffit pour que l'appareil forme un bloc ensuite. Par contre, les garnissages ne sont pas altérés par l'opération de brasage de sorte qu'un fluide introduit dans les colonnes puisse être séparé par une série d'étape de condensation et de vaporisation sur les garnissages des colonnes. De même les colonnes ne sont pas brasées entre elles.

La température maximale subie par l'appareil pendant le brasage est inférieure à la température de fusion des plaques, une plaque étant considérée comme étant distincte de son revêtement de brasure, à la température de fusion des colonnes et de préférence à la température de fusion du moyen d'échange de chaleur et de matière.

Le brasage crée une liaison métallique entre les plaques et les colonnes et moyens de distribution en contact avec les plaques. L'usage de colonnes à section polygonale peut permettre d'avoir une grande surface de contact en commun avec les plaques et ainsi une meilleure cohésion de l'appareil.

Les colonnes n'ont pas besoin d'être attachées les unes aux autres avant l'étape de brasage, ce qui simplifie considérablement la fabrication de l'appareil.

De préférence ce sont des colonnes isolées, chacune indépendante des autres. Leurs dimensions et les moyens d'introduction de fluides dans les colonnes sont choisis pour limiter les arrivées de gaz ou de liquide vers les plaques.

Les moyens de distribution sont également solidarisés aux plaques par l'opération de brasage et ne sont pas fixés aux colonnes ou aux plaques avant l'opération de brasage.

Il est préférable que le fluide à séparer ou à mélanger soit introduit dans chacune des colonnes et l'appareil comprend des moyens d'introduction d'une fraction du fluide dans chacune des colonnes d'une des zones A, C ou D, de préférence dans la partie inférieure de la zone D.

Le fluide à séparer ou à mélanger est envoyé uniquement dans les colonnes et n'est pas directement en contact avec les plaques.

Ensuite le fluide à séparer s'enrichit en son composant le plus léger en montant dans les garnissages de chaque colonne en passant d'une zone de colonnes à celle au-dessus.

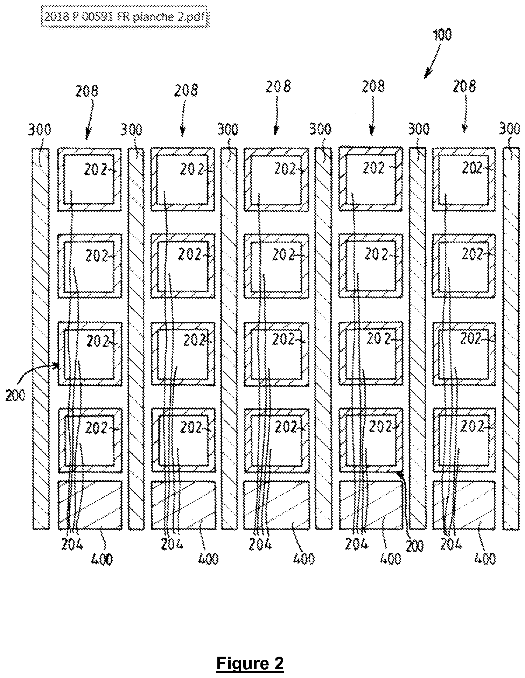

Tel que cela sera plus amplement détaillé ci-après, chaque colonne 200 comprend au moins une paroi périphérique 202 qui délimite un volume interne de la colonne 200 concernée. Plus précisément, chaque paroi périphérique 202 comprend au moins une face externe 211 par l'intermédiaire de laquelle elle est juxtaposée à une autre colonne 200, c'est-à-dire à la face externe de la paroi périphérique de cette autre colonne, et une face interne 212, par exemple visible sur la Figure 2, qui délimite ce volume interne. Au moins un moyen d'échange de chaleur et de matière 230 - également représenté sur la Figure 2 - est agencé dans ce volume interne.

Avantageusement, au moins un moyen d'échange de chaleur et de matière est agencé dans chaque colonne 200, chacun de ces moyens d'échange étant reçu dans un compartiment 204 de la colonne 200 concernée, chaque compartiment 204 étant délimité vers le haut, au moins en partie, par au moins un dispositif de distribution 220. Ces dispositifs de distribution 220 sont configurés pour assurer une répartition homogène d'au moins le premier fluide, avantageusement du premier fluide et du deuxième fluide, sur le(s) moyen(s) d'échange de chaleur et/ou de matière. On comprend que cette homogénéisation permet de favoriser les échanges de chaleur et de matière qui s'opèrent dans ces moyens d'échange.

Selon l'exemple illustré sur la Figure 1, l'appareil 100 comprend trois dispositifs de distribution 220, séparant ainsi l'appareil en quatre zones. Il est entendu qu'il ne s'agit que d'un exemple particulier de réalisation de la présente invention et que cet exemple n'est en rien limitatif de la présente invention.

Ces quatre zones peuvent opérer à des pressions différentes et/ou avoir des fonctions différentes. Par exemple la zone A peut fonctionner à 6 bars et les zones C et D à une pression de 1,4 bars.

Avantageusement, les éléments disposés dans l'appareil 100 sont brasés ensemble au cours de l'opération de brasage qui permet la solidarisation des colonnes 200 entre elles. Autrement dit, l'appareil 100 d'échange de chaleur et/ou de matière est totalement assemblé en une unique étape.

Après le brasage, si l'appareil doit fonctionner à une température très basse ou très élevée par rapport à l'ambiant, il peut être revêtu d'isolation. Sinon l'appareil peut être disposé à l'intérieur d'une enceinte isolée.

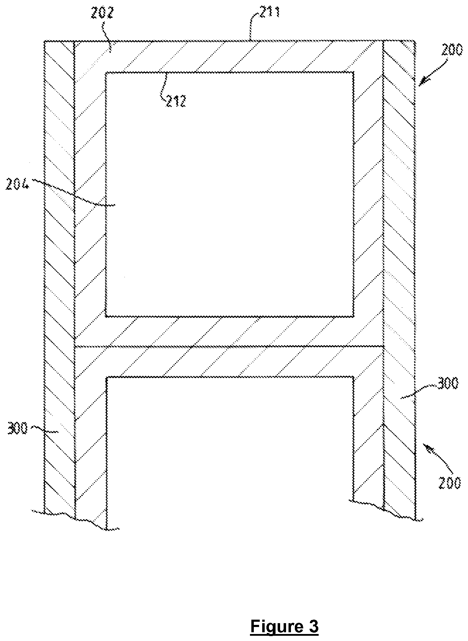

En référence aux Figures 2 et 3, nous allons maintenant décrire de manière plus détaillée un exemple d'une colonne d'échange d'un appareil selon l'invention contenant un moyen d'échange de chaleur et/ou de matière ainsi que son agencement de l'appareil. Ces Figures 2 et 3 illustrent, partiellement, une coupe horizontale, c'est-à-dire une coupe réalisée selon un plan dans lequel s'inscrit l'axe X d'extension principal des colonnes 200, de la Figure 1.

La Figure 2 illustre un exemple de réalisation de la présente invention dans lequel montrant les vingt colonnes d'une zone de l'appareil. Les dimensions des espaces entre colonnes 200 et entre colonne et plaque sont exagérées pour mieux apprécier que chaque colonne 200 est individuelle et n'est pas attachée ni à la plaque adjacente ni aux colonnes avoisinantes avant le brasage. La dimension des plaques 300 est également exagérée car en général elle sera de l'ordre de 1 mm alors que les colonnes carrées 202 auront des dimensions centimétriques et des épaisseurs de quelques millimètres selon les besoins de résistance mécanique à la compression à haute température lors de la phase brasage dans un four et de résistance mécanique à la pression lors de l'utilisation de l'appareil.

Dans cet exemple, l'appareil est divisé en une série de zones mais l'appareil peut dans l'absolu ne comprendre qu'une seule zone, auquel cas, la longueur des colonnes est quasiment celle des plaques.

Dans le cas plus probable, où l'appareil comprend plusieurs zones, les colonnes auront une longueur au plus égale à celle de l'étendue de la zone dans le sens de la longueur de la plaque.

On voit qu'entre chaque paire de plaques 300 on trouve un alignement de quatre colonnes 200 de section carrée avec quatre parois 202 ayant une longueur qui peut être égale à la longueur de la plaque ou égale à une fraction de la longueur de la plaque.

La Figure 3 montre une partie de la zone de la Figure 2 après le procédé de brasage. On voit que la colonne 200 se trouve en sandwich entre deux plaques 300 revêtues de matériaux de brasage. Deux parois opposées des parois 202 de la colonne 200 se retrouvent reliées chacune à une plaque opposée 300. Les deux autres parois opposées 202 sont contiguës aux parois des colonnes adjacentes ou de la colonne adjacente et de la barre de fermeture. L'intérieur 204 de la colonne contient au moins un moyen de favoriser l'échange de chaleur et de matière, tel qu'un garnissage vrac.

Les Figures 1, 2 et 3 décrivaient essentiellement un mode d'assemblage de l'appareil par brasage. On peut également réaliser un tel appareil par un autre mode d'assemblage ou une combinaison de mode d'assemblage tels que le brasage, le rivetage, le collage ou le soudage. A titre d'exemple, on pourrait réalisée la section B seule par brasage et l'assembler par soudage a des sections A, C et D qui auraient aussi été réalisées par soudage.

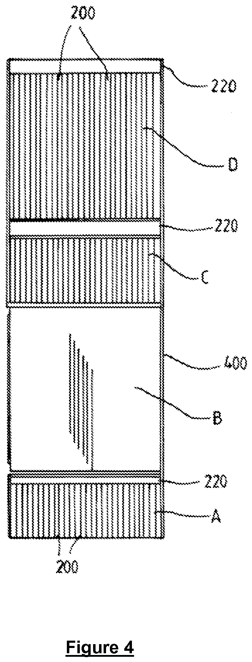

La Figure 4 illustre une coupe d'un appareil selon l'invention capable de servir pour la distillation d'air, par exemple. La coupe correspond à celle de la ligne A-A de la Figure 1 même si l'exemple de la Figure 4 utilise des rangées de colonnes entre deux plaques avec beaucoup plus de colonnes que les quatre de la Figure 1. Le sens de l'empilement des plaques 300 rentre dans la page (axe Y). Vingt-huit colonnes 200 sont alignées dans l'espace entre les mêmes deux plaques adjacentes pour chacune des zones A,C,D la zone B ne contenant pas de colonnes 200. Il en est de même pour chaque paire de plaques de l'empilement de plaques. La zone A correspondant à la colonne moyenne pression est alimentée par son extrémité basse de sorte que le mélange gazeux refroidi à séparer, ici l'air, est envoyé à chacune des colonnes 200 de la zone A. L'air monte dans les colonnes en s'enrichissant en azote et en s'appauvrissant en oxygène au fur et à mesure qu'il passe dans les garnissages vrac à l'intérieur 204 de chaque colonne. Il est possible qu'une petite minorité des colonnes ne soient pas alimentées par l'air sans sortir de l'invention. Ensuite le gaz transite par le moyen de distribution 220 pour passer dans la zone B. La zone B est alimentée par de l'oxygène liquide tombant de la zone C à travers un moyen de distribution. La zone B comprend les passages alternés de vaporisation d'oxygène et de condensation d'azote, chaque passage servant soit à la vaporisation soit à la condensation et la chaleur transitant à travers les plaques 300 délimitant les passages.

L'azote liquéfié distribué par le moyen de distribution 220 retombe dans les colonnes de la zone A pour servir de reflux.

L'oxygène gazeux monte dans la zone C. La zone C est également alimentée par le haut par un liquide enrichi en oxygène provenant de la partie inférieure de la zone A. De l'azote condensé provenant du condenseur B est également envoyé au moyen de distribution 220 au-dessus de la zone D.

Les liquides envoyés aux zones D et C sont séparés dans ces zones par distillation pour produire un gaz riche en azote soutiré des colonnes 200 de la zone D et un liquide riche en oxygène est pris dans les colonnes 200 de la zone C.

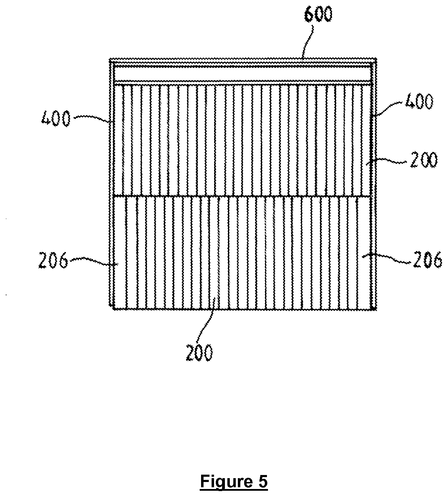

La Figure 5 montre que les colonnes 200 n'ont pas forcément la même longueur que l'étendue de la zone dans le sens de la longueur de la plaque 300. La zone illustrée peut être l'une des zones A, C ou D.

Ici les colonnes 200 ont une longueur égale à la moitié de la dimension de la zone dans le sens vertical. Les colonnes de dessus 200 sont décalées par rapport à celles de dessous en installant des colonnes de section rectangulaires 206 de part et d'autre du groupe de colonnes 200 à section carrée.

Ceci permet un plus grand brassage de liquide et de gaz au sein d'une zone, puisque les liquides et les gaz ne restent pas dans une seule colonne en traversant la zone.

Le brasage peut être sous vide ou pas.

## Revendications

1. Méthode de fabrication d'un appareil d'échange de matière et de chaleur constitué par une pluralité de colonnes (200) et par une série d'au moins trois plaques métalliques (300) de section rectangulaire, les plaques étant substantiellement toutes de même forme et dimensions, au moins les parties des plaques qui sont en contact avec les colonnes étant revêtues d'un matériau de brasement dans lequel les plaques sont solidarisées avec les colonnes en plaçant le corps d'échange dans un four et en chauffant le four pour braser l'appareil pour former un bloc parallélépipédique (100), **caractérisée en ce que** chaque plaque est séparée de la plaque adjacente par un groupe de colonnes creuses en métal qui sont alignées et de section polygonale, de préférence rectangulaire, les colonnes de chaque groupe étant parallèles les unes aux autres, éventuellement toutes les colonnes de l'appareil étant parallèles les unes aux autres, les colonnes de chaque groupe étant chacune en contact avec les deux plaques métalliques de part et d'autre du groupe, au moins certaines des colonnes d'un groupe, voire de chaque groupe, voire toutes les colonnes d'un groupe, contenant un moyen d'échange de chaleur et de matière (230), par exemple un garnissage tel qu'un garnissage métallique en vrac.

2. Méthode selon la revendication 1 dans laquelle la température maximale subie par l'appareil pendant le brasage est inférieure à la température de fusion des plaques (300), à la température de fusion des colonnes (200) et de préférence à la température de fusion du moyen d'échange de chaleur et de matière (230).

3. Méthode selon la revendication 1 ou 2 dans lequel les plaques (300), les colonnes (200) et éventuellement le moyen d'échange de chaleur et de matière (230) sont tous formés i) du même métal ou ii) du même alliage ou iii) d'alliages du même métal principal.

4. Méthode selon l'une des revendications précédentes dans laquelle les plaques (300) et/ou les colonnes (200) et/ou le moyen d'échange de chaleur et de matière (230) est/sont en un des métaux suivants : aluminium, acier inoxydable, nickel, cuivre ou titane.

5. Méthode selon l'une des revendications précédentes dans laquelle au moins certains des colonnes (200) ont une section rectangulaire ou carrée.

6. Méthode selon l'une des revendications précédentes dans laquelle la dimension minimale d'un bord de la section d'une colonne (200) est supérieure à 2 cm et de préférence supérieure à 10 cm.

7. Méthode selon l'une des revendications précédentes dans laquelle la longueur d'une plaque (300) est au moins égale à 1 m.

8. Méthode selon l'une des revendications précédentes dans lequel on remplit des colonnes (200) de garnissage (230), de préférence en vrac, on empile les plaques (300) et les groupes de colonnes remplies, de préférence entièrement, de garnissage pour former l'appareil et ensuite on brase l'appareil pour solidariser les colonnes avec les plaques.

9. Appareil d'échange de matière et/ou de chaleur constitué par une série de plaques métalliques de section rectangulaire (300) , chaque plaque étant séparée de la plaque adjacente par un groupe de colonnes (200) creuses en métal alignées de section de préférence rectangulaire, les colonnes de chaque groupe étant parallèles les unes aux autres, les colonnes de chaque groupe étant chacune en contact avec les deux plaques métalliques de part et d'autre du groupe, au moins certaines des colonnes d'un groupe, voire de chaque groupe, voire toutes les colonnes d'un groupe, contenant un moyen d'échange de chaleur et de matière (230), par exemple un garnissage, tel qu'un garnissage métallique en vrac, au moins les parties qui sont en contact avec les colonnes étant revêtues avant brasage d'un matériau de brasement, l'appareil d'échange étant fabriqué par une méthode selon une des revendications précédentes.

10. Appareil selon la revendication 9 dans lequel chaque plaque (300) est séparée de la plaque adjacente par plusieurs séries de colonnes (200) creuses en métal, alignées de section de préférence rectangulaire, les colonnes de chaque série étant parallèles les unes aux autres, les colonnes de chaque groupe étant chacune en contact avec les deux plaques métalliques de part et d'autre de la série

11. Appareil de séparation, par exemple par distillation ou par lavage, pour usage à des températures en dessous de 0°C comprenant un appareil d'échange de matière et de chaleur selon la revendication 9, l'appareil étant orienté de sorte qu'en usage un liquide introduit dans une colonne (200) coule dans chaque colonne par effet de gravitation, des moyens pour envoyer un fluide à séparer à l'appareil d'échange comprenant au moins deux composants, des moyens pour sortir d'au moins une extrémité de l'appareil au moins un fluide séparé enrichi en un des composants du fluide à séparer et des moyens d'isolation de l'appareil d'échange, par exemple une enceinte isolée contenant l'appareil d'échange.

12. Appareil selon l'une des revendications 9 à 11 dans lequel les moyens pour envoyer le fluide à séparer à l'appareil d'échange sont reliés à au moins les deux tiers des colonnes (200), voire chaque colonne afin d'envoyer une partie du fluide à séparer à au moins deux tiers des colonnes, voire à chaque colonne.

## Patentansprüche

1. Verfahren zur Herstellung einer Vorrichtung zum Austausch von Material und Wärme, die aus mehreren Säulen (200) und einer Reihe von mindestens drei Metallplatten (300) mit rechteckigem Querschnitt besteht, wobei die Platten alle im Wesentlichen dieselbe Form und dieselben Abmessungen aufweisen, zumindest diejenigen Teile der Platten, die sich in Kontakt mit den Säulen befinden, mit einem Hartlötmaterial beschichtet sind, wobei die Platten mit den Säulen fest verbunden werden, indem der Austauscherkörper in einem Ofen angeordnet wird und der Ofen erwärmt wird, um die Vorrichtung unter Bildung eines parallelepipedischen Blocks (100) hartzulöten, **dadurch gekennzeichnet, dass** jede Platte durch eine Gruppe von hohlen Metallsäulen, die ausgerichtet sind und einen polygonalen, vorzugsweise rechteckigen Querschnitt aufweisen, von der benachbarten Platte getrennt ist die Säulen einer jeden Gruppe parallel zueinander sind, gegebenenfalls alle Säulen der Vorrichtung parallel zueinander sind, die Säulen einer jeden Gruppe sich jeweils in Kontakt mit den beiden Metallplatten auf beiden Seiten der Gruppe befinden, zumindest einige der Säulen einer Gruppe oder sogar einer jeden Gruppe oder sogar alle Säulen einer Gruppe ein Mittel (230) zum Austausch von Wärme und Material, beispielsweise eine Füllung wie eine Füllkörperschüttung aus Metall, umfassen.

2. Verfahren nach Anspruch 1, wobei die während des Hartlötens auf die Vorrichtung einwirkende Höchsttemperatur niedriger als der Schmelzpunkt der Platten (300), der Schmelzpunkt der Säulen (200) und vorzugsweise der Schmelzpunkt des Mittels (230) zum Austausch von Wärme und Material ist.

3. Verfahren nach Anspruch 1 oder 2, wobei die Platten (300), die Säulen (200) und gegebenenfalls das Mittel (230) zum Austausch von Wärme und Material alle i) aus demselben Metall oder ii) aus derselben Legierung oder iii) Legierungen desselben Grundmetalls bestehen.

4. Verfahren nach einem der vorhergehenden Ansprüche, wobei die Platten (300) und/oder die Säulen (200) und/oder das Mittel (230) zum Austausch von Wärme und Material aus einem der folgenden Metalle bestehen: Aluminium, Edelstahl, Nickel, Kupfer oder Titan.

5. Verfahren nach einem der vorhergehenden Ansprüche, wobei zumindest einige der Säulen (200) einen rechteckigen oder quadratischen Querschnitt aufweisen.

6. Verfahren nach einem der vorhergehenden Ansprüche, wobei die Mindestgröße eines Randes des Querschnitts einer Säule (200) größer als 2 cm und vorzugsweise größer als 10 cm ist.

7. Verfahren nach einem der vorhergehenden Ansprüche, wobei die Länge einer Platte (300) mindestens gleich 1 m ist.

8. Verfahren nach einem der vorhergehenden Ansprüche, wobei die Säulen (200) mit einer vorzugsweise losen Füllung (230) befüllt werden, die Platten (300) und die Gruppen von vorzugsweise vollständig mit Füllung befüllten Säulen so gestapelt werden, dass die Vorrichtung gebildet wird, und die Vorrichtung anschließend hartgelötet wird, um die Säulen mit den Platten fest zu verbinden.

9. Vorrichtung zum Austausch von Material und/oder Wärme, die aus einer Reihe von Metallplatten (300) mit rechteckigem Querschnitt besteht, wobei jede Platte durch eine Gruppe von ausgerichteten hohlen Metallsäulen (200) mit einem vorzugsweise rechteckigen Querschnitt von der benachbarten Platte getrennt ist, die Säulen einer jeden Gruppe parallel zueinander sind, die Säulen einer jeden Gruppe sich jeweils in Kontakt mit den beiden Metallplatten auf beiden Seiten der Gruppe befinden, zumindest einige der Säulen einer Gruppe oder sogar einer jeden Gruppe oder sogar alle Säulen einer Gruppe ein Mittel (230) zum Austausch von Wärme und Material, beispielsweise eine Füllung wie eine Füllkörperschüttung aus Metall, umfassen, zumindest diejenigen Teile, die sich in Kontakt mit den Säulen befinden, vor dem Hartlöten mit einem Hartlötmaterial beschichtet werden, wobei die Austauschvorrichtung durch ein Verfahren nach einem der vorhergehenden Ansprüche hergestellt wird.

10. Vorrichtung nach Anspruch 9, wobei jede Platte (300) von der benachbarten Platte durch mehrere Reihen von hohlen Metallsäulen (200) getrennt ist, die in einem vorzugsweise rechteckigen Querschnitt angeordnet sind, die Säulen einer jeden Reihe parallel zueinander sind, die Säulen einer jeden Gruppe sich jeweils in Kontakt mit den beiden Metallplatten auf beiden Seiten der Gruppe befinden.

11. Vorrichtung zur Trennung, beispielsweise durch Destillation oder Waschen, zur Verwendung bei Temperaturen unter 0 °C, die eine Vorrichtung zum Austausch von Material und Wärme nach Anspruch 9, wobei die Vorrichtung so ausgerichtet ist, dass bei der Verwendung eine in eine Säule (200) eingeführte Flüssigkeit durch Schwerkraft in jeder Säule fließt, Mittel zum Einleiten eines in der Austauschvorrichtung zu trennenden Fluids, das mindestens zwei Komponenten umfasst, Mittel zum Ableiten mindestens eines getrennten, mit einer der Komponenten des zu trennenden Fluids angereicherten Fluids aus mindestens einem Ende der Vorrichtung, und Mittel zur Isolation der Austauschvorrichtung, beispielsweise eine die Austauschvorrichtung umfassende isolierte Ummantelung, umfasst.

12. Vorrichtung nach einem der Ansprüche 9 bis 11, wobei die Mittel zum Einleiten des in der Austauschvorrichtung zu trennenden Fluids mit mindestens zwei Dritteln der Säulen (200) oder sogar jeder Säule verbunden sind, um einen Teil des zu trennenden Fluids zu mindestens zwei Dritteln der Säulen oder sogar zu jeder Säule zu leiten.

## Claims

1. Method for manufacturing a heat and material exchange apparatus that is constituted by a plurality of columns (200) and by a series of at least three metal plates (300) of rectangular section, the plates being substantially all of the same shape and dimensions, at least the parts of the plates which are in contact with the columns being coated with a brazing material wherein the plates are secured to the columns by placing the exchange body in a furnace and by heating the furnace in order to braze the apparatus to form a parallelepipedal block (100), **characterized in that** each plate is separated from the adjacent plate by a group of hollow metal columns that are aligned and have a section which is polygonal, which is preferably rectangular, the columns of each group being parallel to one another, optionally all the columns of the apparatus being parallel to one another, the columns of each group each being in contact with the two metal plates on either side of the group, at least some of the columns of a group, or even of each group, or even all the columns of a group, containing a material and heat exchange means (230), for example a packing such as a random metal packing.

2. Method according to Claim 1, wherein the maximum temperature experienced by the apparatus during brazing is lower than the melting point of the plates (300), than the melting point of the columns (200) and preferably than the melting point of the material and heat exchange means (230).

3. Method according to Claim 1 or 2, wherein the plates (300), the columns (200) and optionally the material and heat exchange means (230) are all formed i) of the same metal or ii) of the same alloy or iii) of alloys with the same main metal.

4. Method according to one of the preceding claims, wherein the plates (300) and/or the columns (200) and/or the material and heat exchange means (230) is/are made of one of the following metals: aluminium, stainless steel, nickel, copper or titanium.

5. Method according to one of the preceding claims, wherein at least some of the columns (200) have a rectangular or square section.

6. Method according to one of the preceding claims, wherein the minimum dimension of an edge of the section of a column (200) is greater than 2 cm and preferably greater than 10 cm.

7. Method according to one of the preceding claims, wherein the length of a plate (300) is at least equal to 1 m.

8. Method according to one of the preceding claims, wherein the columns (200) are filled with packing (230), preferably random packing, the plates (300) and the groups of columns filled, preferably entirely, with packing are stacked so as to form the apparatus and the apparatus is subsequently brazed in order to secure the columns to the plates.

9. Heat and/or material exchange apparatus that is constituted by a series of metal plates of rectangular section (300), each plate being separated from the adjacent plate by a group of hollow metal columns (200) that are aligned and have a section which is preferably rectangular, the columns of each group being parallel to one another, the columns of each group each being in contact with the two metal plates on either side of the group, at least some of the columns of a group, or even of each group, or even all the columns of a group, containing a material and heat exchange means (230), for example a packing, such as a random metal packing, at least the parts which are in contact with the columns being coated prior to brazing with a brazing material, the exchange apparatus being manufactured by a method according to one of the preceding claims.

10. Apparatus according to Claim 9, wherein each plate (300) is separated from the adjacent plate by several series of hollow metal columns (200) that are aligned and have a section which is preferably rectangular, the columns of each series being parallel to one another, the columns of each group each being in contact with the two metal plates on either side of the series.

11. Apparatus for separation, for example by distillation or by scrubbing, for use at temperatures below 0°C, comprising a heat and material exchange apparatus according to Claim 9, the apparatus being oriented such that, in use, a liquid introduced into a column (200) flows in each column under gravity, means for sending a fluid to be separated to the exchange apparatus comprising at least two components, means for extracting, from at least one end of the apparatus, at least one separated fluid enriched in one of the components of the fluid to be separated, and means for insulating the exchange apparatus, for example an insulated chamber containing the exchange apparatus.

12. Apparatus according to one of Claims 9 to 11, wherein the means for sending the fluid to be separated to the exchange apparatus are connected to at least two thirds of the columns (200), or even to each column in order to send some of the fluid to be separated to at least two thirds of the columns, or even to each column.
